Europäisches Patentamt

European Patent Office

Office européen des brevets

(11) Veröffentlichungsnummer: **0 337 093**

A1

## (12) EUROPÄISCHE PATENTANMELDUNG

(21) Anmeldenummer: 89103440.7

(22) Anmeldetag: 28.02.89

(51) Int. Cl.4: **C09J 3/16** , **C08L 61/34**

(30) Priorität: 07.03.88 DE 3807402

(43) Veröffentlichungstag der Anmeldung:
18.10.89 Patentblatt 89/42

(84) Benannte Vertragsstaaten:
AT BE CH DE FR IT LI NL SE

(71) Anmelder: BASF Aktiengesellschaft
Carl-Bosch-Strasse 38
D-6700 Ludwigshafen(DE)

(72) Erfinder: Schmidt-Hellerau, Christof
Rheinrugenstrasse 45
D-6700 Ludwigshafen(DE)
Erfinder: Weber, Engelbert
Neubergstrasse 45
D-6730 Neustadt(DE)
Erfinder: Matthias, Guenther, Dr.
Meergartenweg 25 a
D-6710 Frankenthal(DE)

(54) Wässrige Aminoharz-Lösungen für formaldehydarme Flächenverleimungen.

(57) Die vorliegende Anmeldung betrifft wäßrige Aminoharz-Lösungen für formaldehydarme Flächenverleimungen auf Basis von Kondensationsprodukten aus Melamin, Harnstoff, Phenol und Formaldehyd mit einem Molverhältnis von 1,4 bis 1,8 mol Formaldehyd, 0,04 bis 0,1 mol Melamin und 0,015 bis 0,04 mol Phenol pro mol Harnstoff, bezogen auf die Gesamtmenge des Aminoharzes, erhältlich durch Mischen von
  A) 20 bis 40 Gew.% eines Melamin-Harnstoff-Phenol-Formaldehyd-Kondensationsproduktes mit
  B) 60 bis 80 Gew.% eines Harnstoff-Formaldehyd-Kondensationsproduktes.

EP 0 337 093 A1

## Wäßrige Aminoharz-Lösungen für formaldehydarme Flächenverleimungen

Die vorliegende Erfindung betrifft wäßrige Aminoharz-Lösungen für formaldehydarme Flächenverleimungen auf Basis von Melamin-Harnstoff-Phenol-Formaldehyd-Kondensationsprodukten mit einem Molverhältnis von 1,5 bis 1,8 mol Formaldehyd, 0,04 bis 0,1 mol Melamin und 0,015 bis 0,04 mol Phenol pro mol Harnstoff, bezogen auf die Gesamtmenge des Aminoharzes, sowie deren Verwendung.

Wäßrige Aminoharz-Lösungen auf Basis von Melamin-Harnstoff-Phenol-Formaldehyd-Kondensationsprodukten zur Verwendung als Leimharze sind seit langem bekannt. So wird in der DE-C 20 20 481 ein Verfahren zur Herstellung derartiger Harzlösungen beschrieben, das dadurch gekennzeichnet ist, daß zunächst aus Melamin und/oder Harnstoff mit Formaldehyd eine Kondensatlösung hergestellt wird, die dann mit Phenol und gegebenenfalls Formaldehyd und Melamin weiter umgesetzt wird.

Der Hauptnachteil dieser Harzlösungen besteht darin, daß sie nach dem Aushärten leicht Formaldehyd abgeben, was unerwünscht ist. Weiterhin ist die Lagerfähigkeit der Harzlösungen begrenzt.

In der EP-B 00 69 267 wird ein Verfahren zur Herstellung wäßriger Lösungen von Kondensationsprodukten aus Melamin, Harnstoff, Phenol und Formaldehyd beschrieben, wobei zunächst ein Phenol-Formaldehyd- und ein Harnstoff-Formaldehyd-Kondensat hergestellt werden, die gemeinsam mit Melamin und Formaldehyd weiter umgesetzt werden mit gegebenenfalls weiterer Umsetzung mit Harnstoff. Diese Harzlösungen weisen eine verbesserte Wasserverdünnbarkeit auf und setzen bei der Verarbeitung weniger Formaldehyd frei, verglichen mit dem Stand der Technik. Aber die Formaldehyd-Abgabe des fertigen Holzkörpers sowie die Lagerstabilität der Harzlösungen reichen für manche Anwendungsgebiete immer noch nicht aus.

Aufgabe der vorliegenden Erfindung war es, wäßrige Aminoharz-Lösungen für Flächenverleimungen zur Verfügung zu stellen mit guter Lagerstabilität, hoher Reaktivität sowie geringer Formaldehydabgabe sowohl beim Gebrauch als auch aus dem fertigen Werkstoff.

Weitere Aufgaben der Erfindung waren die Bereitstellung von für die Flächenverleimung relativ hochviskosen Harzlösungen, die nach der Flächenverleimung von Holzteilen Formkörper ergeben mit guten Festigkeitseigenschaften bei hoher Elastizität und guter Wasserfestigkeit gemäß der Norm DIN 68705, Klasse IW 67.

Überraschenderweise wurde gefunden, daß diese sich teilweise widersprechenden Anforderungen durch ein Harzgemisch aus einem Melamin-Harnstoff-Phenol-Formaldehyd-Kondensationsprodukt und einem Harnstoff-Formaldehyd-Kondensationsprodukt mit eng begrenzten Molverhältnissen gelöst werden können.

Gegenstand der vorliegenden Erfindung sind wäßrige Aminoharz-Lösungen für formaldehydarme Flächenverleimungen auf Basis von Kondensationsprodukten aus Melamin, Harnstoff, Phenol und Formaldehyd mit einem Molverhältnis von 1,5 bis 1,8 mol Formaldehyd, 0,04 bis 0,1 mol Melamin und 0,015 bis 0,04 mol Phenol pro mol Harnstoff, bezogen auf die Gesamtmenge des Aminoharzes, erhältlich durch Mischen von

A) 20 bis 40 Gew.% eines Melamin-Harnstoff-Phenol-Formaldehyd-Kondensationsproduktes mit

B) 60 bis 80 Gew.% eines Harnstoff-Formaldehyd-Kondensationsproduktes.

Zu den Aufbaukomponenten ist im einzelnen folgendes auszuführen.

Die Aufbaukomponente A) ist erhältlich durch Kondensation einer Mischung, die pro mol Harnstoff 2,5 bis 3,5 mol Formaldehyd, 0,4 bis 0,5 mol Melamin und 0,1 bis 0,2 mol eines Phenols enthält, indem man in an sich bekannter Weise aus 1 mol Harnstoff und 1,5 bis 2,5 mol Formaldehyd eine entsprechend konzentrierte wäßrige Kondensatlösung einer Wasserverträglichkeit von 0,5 bis 10 kondensiert und das Kondensat bei einem pH-Wert von 7,5 bis 10 und bei 45 bis 100°C mit je 0,05 bis 0,2 mol eines Phenols, gegebenenfalls bis zu 0,5 mol Formaldehyd und gegebenenfalls bis zu 0,5 mol Melamin umsetzt, bis die wäßrige Lösung, gemessen bei einem Feststoffgehalt von 63 Gew.% und bei 20°C, eine Viskosität von 300 bis 2000 mPas erreicht.

Höherer Melamingehalt bedingt dabei in der Regel jeweils einen relativ höheren Formaldehydgehalt.

Beispielsweise kann man ein Aminoharz erhalten, indem man zunächst Harnstoff und Formaldehyd bei pH 3 bis 6,5, insbesondere pH 4 bis 5, und bei 80 bis 100°C kondensiert, wobei ein wäßriges Harnstoff-Formaldehyd-Harz erhalten wird, und bei pH 7 bis 10, unter Zusatz eines Phenols, Formaldehyd und Melamin bis zur obengenannten Viskosität weiterkondensiert.

Andererseits kann auch in der ersten Kondensationsstufe Melamin mit Harnstoff kondensiert werden. Man arbeitet dann jedoch zweckmäßig im alkalischen Bereich, d.h. bei pH 7,5 bis 10. Man erhält ein Harnstoff- Melamin-Mischharz, das nun mit Phenol und Formaldehyd, gegebenenfalls noch zusammen mit einer Restmenge an Melamin weiterkondensiert wird, bis die gewünschte Viskosität erreicht ist. Geeignete Phenole sind das Phenol, Resorcin, Kresole oder Xylenole und technische Mischungen dieser Phenole.

Die Komponente A) wird in einer Konzentration von 20 bis 40 Gew.%, bevorzugt 25 bis 35 Gew.% verwendet.

Die Aufbaukomponente B) ist erhältlich in an sich bekannter Weise durch Kondensation von 1 mol Harnstoff mit 1,1 bis 1,5 mol, bevorzugt 1,2 bis 1,4 mol Formaldehyd. Sie weist einen Feststoffgehalt von 50 bis 70 Gew.% auf und eine Viskosität über 800 bis 1200 mPas. Das Harnstoff-Formaldehyd-Harz kann auch in Gegenwart von Monoalkoholen und Diolen mit bis zu 6 C-Atomen hergestellt werden, wobei teilweise Etherbildung auftritt. Geeignete Monoalkohole sind Methanol und Ethanol. Geeignete Diole sind Ethylenglykol, Diethylenglykol, Triethylenglykol und Propylenglykol. Es können bis zu 3,5 Gew.% Alkohole, bezogen auf die Komponente B), mitverwendet werden.

Die Aufbaukomponente B) wird in einer Konzentration von 60 bis 80 Gew.%, bevorzugt 65 bis 70 Gew.% verwendet.

Die Komponenten A) und B) werden unter Rühren bei Raumtemperatur so vermischt, daß, bezogen auf den Feststoffgehalt des Aminoharz-Gemisches, pro mol Harnstoff 1,4 bis 1,8 mol, bevorzugt 1,5 bis 1,7 mol Formaldehyd, 0,04 bis 0,1 mol, bevorzugt 0,05 bis 0,08 mol Melamin und 0,015 bis 0,04, bevorzugt 0,02 bis 0,03 mol Phenol verwendet werden. Das Aminoharz-Gemisch weist Feststoffgehalte von 60 bis 80 Gew.%, bevorzugt 60 bis 68 Gew.%, auf und Viskositäten von 800 bis 1200 mPas, bevorzugt 800 bis 1000 mPas., gemessen an einer Lösung mit 65 Gew.% Trockenrückstand. Die Gelierzeiten liegen zwischen 40 bis 50, bevorzugt 40 bis 60 Sekunden, gemessen bei 100°C unter Zusatz von 0,75 Gew.% Ammoniumchlorid.

Diese Aminoharz-Lösungen weisen eine geringe Formaldehydemission sowohl beim Gebrauch als auch aus den mit daraus hergestellten Holzwerkstoffen auf. Die Lagerbeständigkeit, definiert als Zeit in Wochen bis zur maximalen Viskosität von 2500 mPas. nach Lagerung bei 25°C, ist gut und beträgt 15 bis 40 Wochen. Die Lösungen eignen sich hervorragend als Leimharze für die Flächenverleimung von allen Holzarten. Dabei wird das für die Normklasse IW 67 innerhalb DIN 68 705 erforderliche Festigkeitsniveau, auch für z.B. schwerverleimbare Buchenfurniere, überschritten. Die Normklasse IW 67 beinhaltet, daß das furnierte Werkstück nach 3stündigem Wässern bei 67°C beim Aufstechtest mit dem Messer keine Fugentrennung aufweisen darf. Mit dieser Aminoharz-Lösung lassen sich neben Verleimungen auch Flächen von Holzteilen zu lackglänzenden Oberflächen lackieren. Hierfür und für die Flächenverleimung ist eine gute Elastizität erforderlich, da beispielsweise Latten für Bettroste oder Stuhllehnen Biegebeanspruchungen unterworfen sind.

Der Aminoharz-Lösung können noch die für die Leimharzherstellung üblichen Additive wie Härter, Füllstoffe, Streckmittel, Fungizide, Additive zur Verbesserung der Kaltklebrigkeit, in Mengen bis zu 20 Gew.% zugesetzt werden.

Beispiel 1

Herstellung der Komponente A)

960 g eines handelsüblichen wäßrigen Harnstoff-Formaldehyd-Leimharzes mit einem Molverhältnis von Harnstoff zu Formaldehyd von 1:1,8, das eine Wasserverträglichkeit von 1,5 bis 2,5 und einen Feststoffgehalt von etwa 65 Gew.% aufweist, wurden mit 390,5 g Melamin, 700,5 g einer 40 gew.%igen Formaldehydlösung und 108,5 g Phenol bei 90°C kondensiert, wobei der pH-Wert der Lösung von 8,5 durch Zugabe von insgesamt 10 g einer 25 gew.%igen wäßrigen Natriumhydroxidlösung konstant gehalten wurde, bis die Viskosität der Harzlösung einen Wert von etwa 700 mPas. (20°C) erreicht hatte. Dies war nach etwa 100 Minuten der Fall.

Herstellung der Aminoharz-Lösung

30 g der Komponente A) wurden mit 70 g eines hochviskosen Harnstoff-Formaldehyd-Kondensationsproduktes mit einem Molverhältnis von Harnstoff zu Formaldehyd von 1:1,35, einem Ethylenglykolgehalt von 1,2 Gew.%, einem Trockengehalt von 66,5 Gew.% und einem Gehalt an freiem Formaldehyd von 0,35 Gew.%, bei Raumtemperatur zu einer Aminoharz-Lösung gemischt, deren Eigenschaften in der Tabelle 1 aufgeführt sind.

Beispiel 2

40 Gew.% Komponente A wurden mit 60 Gew.% Komponente B gemischt, wobei Komponente B ein UF-Harz darstellt mit den kennzeichnenden Eigenschaften:
Molverhältnis U:F = 1:1,25, Ethylenglykol = 0,9 Gew.%, Methanol = 0,8 Gew.%, Trockengehalt = 66,8 Gew.%, freier Formaldehyd = 0,2 Gew.%, freier Harnstoff = 10,7 Gew.%.

Beispiel 3

20 Gew.% Komponente A wurden mit 80 Gew.% Komponente B gemischt, wobei Komponente B die gleiche Zusammensetzung wie in Beispiel 1 hatte.

Vergleichsbeispiel

Hier wurde das hochviskose Harnstoff-Formaldehyd-Kondensationsprodukt (UF-Harz) aus Beispiel 1 verwendet.

Tabelle 1

|  | 1 | 2 | 3 |
|---|---|---|---|
| Formaldehyd Gew.% | 31,1 | 30,1 | 31,4 |
| Harnstoff Gew.% | 38,4 | 36,9 | 41,2 |
| Melamin Gew.% | 5,4 | 7,2 | 3,6 |
| Phenol Gew.% | 1,54 | ·2,0 | 1,0 |
| Ethylenglykol Gew.% | 0,84 | 0,54 | 0,96 |
| Viskosität mPa.s | 932 | 902 | 979 |
| Trockengehalt Gew.% | 64,0 | 64,7 | 66,2 |
| Dichte g/cm$^3$ | 1,284 | 1,289 | 1,295 |
| pH-Wert | 8,95 | 9,10 | 9,0 |
| freier Formaldehyd % | ·0,37 | 0,33 | 0,40 |
| Hydroximethyl Gew.% | 19,2 | 18,2 | 19,7 |
| Wassermischbarkeit | 1 : 0,8 | 1 : 0,6 | 1 : 1,2 |
| 25°C Lagerbarkeit bis zum Erreichen von 2500 mPa.s | 16 Wochen | 18 Wochen | 11 Wochen |
| Gelierzeit b. 100°C s | 59 | 50 | 65 |
| Freier Harnstoff Gew.% | 2,2 | 4,1 | 3,3 |

Herstellung von Prüfkörpern

Zu den Aminoharz-Lösungen der Beispiele wurden die in der Tabelle 2 aufgeführten Additive gegeben und daraus 5-fache Buchensperrholzplatten von je 1,5 mm unter den in der Tabelle 2 angegebenen Herstellbedingungen hergestellt. Die Holzart Buche wurde ausgewählt, da sie
a) am schwierigsten zu verleimen ist und
b) die höchste Gasdurchlässigkeit besitzt.
Somit wurden die schwierigsten Versuchsbedingungen gewählt.

4

Tabelle 2

| | 1 | 2 | 3 | UF-Harz Molverh.1:1,8 |
|---|---|---|---|---|
| Aminoharz | 100 | 100 | 100 | 100 |
| Kokosnußschalenmehl | 15 | 15 | 15 | 15 |
| Härter: | | | | |
| (31 Gew.% Glutarsäure | | | | |
| 25 Gew.% Harnstoff | | | | |
| 7,5 Gew.% Ammoniak | | | | |
| 36,5 % Wasser) | 10 | 10 | 10 | 10 |
| Ammoniumchlorid-Lsg. 98 gew.%ig | 3 | 3 | 3 | 3 |
| Weizenmehl | 5 | 5 | 5 | 5 |
| Daten: | | | | |
| Viskosität bei 20°C mPa.s | 3420 | 3120 | 3870 | 3230 |
| Leimauftrag g/m² | 200 | 200 | 200 | 200 |
| Holzart | | 5 x 1,5 mm Buche | | |
| Preßdruck N/mm² | 1,4 | 1,4 | 1,4 | 1,4 |
| Preßzeit bei 100°C (min) | 6 | 6 | 6 | 6 |
| Plattenprüfung | | | | |
| *Reißwert trocken N/mm² | 4,13 | 3,86 | 3,45 | 3,86 |
| dabei *Holzfaserriß % | 82 | 94 | 90 | 74 |
| Aufstechwert | 1-2 | 1-2 | 2 | 2 |
| *Reißwert nach 24 h Wässern N/mm² bei 20°C | 3,18 | 3,43 | 2,80 | 3,43 |
| dabei *Holzfaserriß % | 84 | 100 | 80 | 70 |
| Aufstechwert | 1-2 | 1-2 | 2 | 2-3 |
| *Reißwert nach 3 h Wässern N/mm² bei 67°C | 2,79 | 3,12 | 2,26 | 2,19 |
| dabei *Holzfaserriß % | 14 | 96 | 11 | 0 |
| Aufstechwert | 2-3 | 2 | 2-3 | 3-4 |

* = Mittelwert aus 4 Platten mit je 5 Prüfkörpern
Gasanalyse DIN 52 368: (Schmalflächen geschützt)

| | | | | |
|---|---|---|---|---|
| mg HCHO/m²h (2.-4.h) | 1,9 | 2,9 | 1,7 | 4,4 |

Schon bei der Prüfung IF (24 Stunden Wässern bei 20°C) zeigt sich beim Aufstechwert der erfindungsgemäßen Harze 1 bis 3 eine verbesserte Note gegenüber dem UF-Harz. Dabei bedeuten
Note 1: 100 %iger Holzbruch (sehr gut)
Note 2: 70 % der aufgestochenen Fläche hat Holzbruch (gut)
Note 3: 35 % der aufgestochenen Fläche hat Holzbruch (genügend)
Note 4: 0 % der aufgestochenen Fläche hat Holzbruch (unzureichend)
Bei der Prüfung nach IW 67 (3 Stunden Wässern bei 67°C) ergibt das UF-Harz eine unzureichende Verleimung, während die erfindungsgemäßen Harze gut sind.

Die Gasanalysenwerte gemäß DIN 52 368, die Formaldehydemission betreffend, zeigen die Überlegenheit der erfindungsgemäßen Harze gegenüber dem UF-Harz.

Das den erfindungsgemäßen Harzen zugrundeliegende Melamin-Harnstoff-Phenol-Formaldehyd-Harz ist hier nicht im Detail aufgeführt, erbringt aber bei sehr guten Platteneigenschaften eine Lagerbeständigkeit von nur 7 Wochen und eine Formaldehydemission von ca. 5 mg/m² und Stunde, also einen zu hohen Wert.

Ein UF-Harz mit einem Molverhältnis Formaldehyd zu Harnstoff von 1,35:1 und einer Viskosität von 800 mPas. weist eine Lagerbeständigkeit von nur 7 Wochen bei 25°C auf. Somit zeigen die erfindungsgemäßen Aminoharz-Lösungen gegenüber den Einzelkomponenten einen überraschenden Effekt.

Beschichtung einer Bettlatte

5

Mit der Aminoharz-Lösung des Beispiels 1 wurden gemäß Tabelle 2 gebogene Bettlatten hergestellt mit der Abweichung, daß 7 Buchenfurniere von 1,2 mm Dicke lang auf lang verleimt wurden. Ein Teil der Bettlatten wurde beschichtet mit folgendem Ansatz:

150 g/m² Leimflotte bestehend aus 100 Gew.% Leimharz, 15 Gew.% Weizenmehl und 10 Gew.% Härter. Der Härter war eine Lösung von 12,5 g Ammoniumchlorid und 37,5 g Harnstoff in 50 g Wasser. Die Beschichtung und Pressung der Platte erfolgte gleichzeitig, d.h. die Beschichtungsflotte wurde vor der Pressung zugefügt.

Die Formaldehydabspaltung (Gasanalyse) betrug bei den unbeschichteten Platten 1,9 mg/m² und Stunde, bei den beschichteten 0,16 mg/m² und Stunde.


## Ansprüche

1. Wäßrige Aminoharz-Lösungen für formaldehydarme Flächenverleimungen auf Basis von Kondensationsprodukten aus Melamin, Harnstoff, Phenol und Formaldehyd mit einem Molverhältnis von 1,4 bis 1,8 mol Formaldehyd, 0,04 bis 0,1 mol Melamin und 0,015 bis 0,04 mol Phenol pro mol Harnstoff, bezogen auf die Gesamtmenge des Aminoharzes, erhältlich durch Mischen von
    A) 20 bis 40 Gew.% eines Melamin-Harnstoff-Phenol-Formaldehyd-Kondensationsproduktes mit
    B) 60 bis 80 Gew.% eines Harnstoff-Formaldehyd-Kondensationsproduktes.

2. Aminoharz-Lösungen nach Anspruch 1, erhältlich unter Einhaltung eines Molverhältnisses von 1,5 bis 1,7 mol Formaldehyd, 0,05 bis 0,08 mol Melamin und 0,02 bis 0,03 mol Phenol pro mol Harnstoff, bezogen auf die Gesamtmenge des Aminoharzes.

3. Aminoharz-Lösungen nach Anspruch 1 oder 2, erhältlich mit einer Komponente A), zu deren Herstellung pro mol Harnstoff 2,5 bis 3,5 mol Formaldehyd, 0,4 bis 0,5 mol Melamin und 0,1 bis 0,2 mol Phenol verwendet werden.

4. Aminoharz-Lösungen nach einem der Ansprüche 1 bis 3, erhältlich mit einer Komponente B), die mit einem Molverhältnis von Harnstoff zu Formaldehyd von 1:1,1 bis 1,5 hergestellt wurde.

5. Aminoharz-Lösungen nach einem der Ansprüche 1 bis 4, erhältlich mit einer Komponente B), die mit einem Monoalkohol oder einem Diol modifiziert wurde.

6. Aminoharz-Lösungen nach einem der Ansprüche 1 bis 5, dadurch gekennzeichnet, daß sie einen Trockengehalt von mindestens 60 Gew.% aufweisen.

7. Aminoharz-Lösungen nach einem der Ansprüche 1 bis 6, dadurch gekennzeichnet, daß sie bei einem Trockengehalt von 65 Gew.% eine Viskosität bei 20°C von 800 bis 1200 mPas aufweisen.

8. Verwendung der Aminoharz-Lösungen gemäß einem der Ansprüche 1 bis 7 als Flächenleim zur Herstellung von Sperrholz, Holzformteilen, Türen oder furnierten Platten.

9. Verwendung der Aminoharz-Lösungen gemäß einem der Ansprüche 1 bis 7 als Beschichtungsmittel zur Beschichtung von Holzoberflächen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 031 533 (BASF AG) * Ansprüche 1,2; Seite 2, Zeile 4-9; Seite 4, Zeilen 24-25 * --- | 1-4,6,8 ,9 | C 09 J 3/16 C 08 L 61/34 |
| Y,D | EP-A-0 069 267 (BASF AG) * Ansprüche 1,2 * --- | 1-4,6,8 ,9 | |
| A | EP-A-0 052 212 (BASF AG) * Ansprüche 1,6; Seite 6, Zeilen 10-25 * --- | 1 | |
| A,D | DE-A-2 020 481 (BADISCHE ANILIN- & SODA-FABRIK AG) * Ansprüche 1-3; Seite 2, Absatz 2 * --- | 1 | |
| A | PATENT ABSTRACTS OF JAPAN Band 9, Nr. 166 (C-290) (1889), 11. Juli 1985; & JP - A - 60040178 (MITSUI TOATSU KAGAKU K. K.) 02.03.1985 * gesamte Zusammenfassung * ----- | 1 | **RECHERCHIERTE SACHGEBIETE (Int. Cl.4)** C 09 J C 08 G C 08 L |

Der vorliegende Recherchenbericht wurde für alle Patentansprüche erstellt

| Recherchenort | Abschlußdatum der Recherche | Prüfer |
|---|---|---|
| BERLIN | 01-06-1989 | VOIGTLAENDER R O J |